# EUROPEAN PATENT SPECIFICATION

(11) **EP 2 424 932 B1**
(45) Date of publication and mention of the grant of the patent: **13.07.2016**
(21) Application number: 10725963.2
(22) Date of filing: 23.04.2010
(51) Int. Cl.: C08K 5/18, C08K 5/3437

(54) **THERMOPLASTIC POLYMERIC COMPOSITION WITH IMPROVED RESISTANCE TO THERMO-OXIDATIVE DEGRADATION AND USE THEREOF FOR PRODUCING PIPES**
THERMOPLASTISCHE POLYMERE MASSE MIT VERBESSERTER BESTÄNDIGKEIT GEGEN THERMOOXIDATIVEN ABBAU UND IHRE VERWENDUNG FÜR DAS HERSTELLEN VON ROHREN
COMPOSITION POLYMERE THERMOPLASTIQUE A RESISTANCE AMELIOREE CONTRE LA DEGRADATION THERMO-OXYDATIVE ET SON UTILISATION POUR LA PRODUCTION DE TUYAUX

(30) Priority: 29.04.2009 DE 102009019110; 05.06.2009 US 217924 P
(43) Date of publication of application: 07.03.2012
(73) Proprietor: Basell Polyolefine GmbH, 50389 Wesseling (DE)
(72) Inventor: VOGT, Heinz, 65929 Frankfurt (DE); NITZ, Hansjörg, 65931 Frankfurt (DE)
(74) Representative: Gaverini, Gaetano Luigi Attilio
(86) International application number: PCT/EP2010/002494
(87) International publication number: WO 2010/124813

(56) References cited:
- EP-A2- 0 309 284
- DE-B- 1 162 556
- US-A- 3 060 149

## Description

The present invention relates to a process for improving the resistance to thermo-oxidative degradation of pipes which are in extended contact with liquids which contain disinfectants with an oxidative action.

Moulding compositions of polyethylene (PE), polypropylene (PP) and polybutene-1 (PB-1) have for many years been used for producing plastics pipes for distributing hot and cold water in buildings (see EP 739 937).

While pipes made from the stated plastics do indeed have very good resistance to water, it has been found that their service life is severely limited if the pipes come into contact with conventional disinfectants which are often added to the water for reasons of hygiene. Small amounts of substances with an oxidative action such as chlorine gas, sodium hypochlorite (chlorine bleach solution), calcium hypochlorite or chlorine dioxide are in fact generally added as a disinfectant to municipal drinking water, while hydrogen peroxide (H₂O₂) or ozone (O₃) are also occasionally used.

The polyethylene pipes may here be uncrosslinked or crosslinked. Crosslinking may here proceed by the conventional crosslinking processes used industrially by means of organic peroxides, grafted vinylsilane esters or by means of high-energy radiation (γ or β radiation).

The object of the present invention was accordingly to provide a novel process for improving the resistance to thermo-oxidative degradation of pipes which are in extended contact with liquids containing disinfectants with an oxidative action, by extrusion of a moulding composition based on PE, PP or PB-1 which, while retaining good processability into pipes with regard to their use for drinking water which contains disinfectants with an oxidative action, exhibits improved resistance, in particular over an extended period of time.

This object is achieved by extruding a polyolefinic moulding extruding composition, the characterizing feature of which should be considered to be that it contains a thermoplastic polyolefin and an amount of 0.01 to 1.0 wt.%, calculated on the total weight of the moulding composition, of an aromatic amine which is liquid under standard pressure and in the temperature range from 0 to 30°C.

WO 03/064511 has already disclosed a polyolefin such as PE or PP which, in order to improve its resistance to chlorine, contains a stabilizer combination of an organotin compound and NH-containing substances.

DE1162556 discloses moulding compositions based on polyolefins and stabilized using a mixture of thiodipropionic acid ester and phenyl-substituted amine.

The moulding composition according to the invention differs from the prior art by the selection of specific liquid amines from among the many known amino compounds, which specific liquid amines, even in the absence of tin compounds hitherto considered necessary, particularly surprisingly impart good stability to pipes made from the moulding composition against the oxidative action of the disinfectants in the water over an extended period of time.

6-Ethoxy-2,2,4-trimethyl-1,2-dihydroquinoline and dimethylphenylenediamine have proved to be particularly suitable aromatic amines. The preferred amounts in which these aromatic amines are used are in the range from 0.01 to 0.5 wt.%, particularly preferably from 0.1 to 0.3 wt.%.

In one particular embodiment of the invention, further stabilizers of a conventional type, such as IRGANOX 1010 or IRGAPHOS 168, may additionally be added to the moulding composition. The chemical name for Irganox 1010 is 3-(3,5-di-tert.-butyl-4-hydroxyphenylpropionic acid and that of Irgaphos 168 is tris(2,4-di-tert.-butylphenyl)phosphite.

The amount in which the additional stabilizers may be present in the moulding compositions according to the invention is variable and is in the range from 0.1 to 5 wt.%, calculated on the total weight of the moulding composition.

Thermoplastic polyolefins which are particularly suitable according to the invention are PE, PP and PB-1 or copolymers of olefins with 2, 3 or 4 C atoms or with further olefinic monomers with 5 to 10 C atoms which may readily be processed into pipes by extrusion.

PE moulding compositions according to the invention have for example a density at a temperature of 23°C in the range from 0.93 to 0.965 g/cm³ and a melt index MI_{190/5} in the range from 0.1 to 2 g/10 min. Such polyethylene moulding compositions are produced by polymerization of ethylene or copolymerization of ethylene together with other olefinic comonomers in the presence of suitable catalysts such as Ziegler or Phillips catalysts or also metallocene catalysts in suspension or in the gas phase and are also known by the name low-pressure polyethylene or HDPE.

PP moulding compositions according to the invention may for example be high molecular weight homopolymers, random copolymers or block copolymers with a melt index MI_{230/5} in the range from 0.1 to 2 g/10 min.

PB-1 moulding compositions according to the invention may for example be homopolymers or copolymers with a melt index MI_{190/2.16} in the range from 0.1 to 1 g/10 min and a density at a temperature of 23°C in the range from 0.92 to 0.95 g/cm³.

Beside the thermoplastic polyolefin, the moulding composition according to the invention may contain still further additives. Such additives are preferably heat and processing stabilizers, antioxidants, UV absorbers, light stabilizers, metal deactivators, peroxy-scavenging compounds, organic peroxides, basic co-stabilizers in amounts of 0 to 10 wt.%, preferably of 0 to 5 wt.%, as well as carbon black, fillers, pigments or combinations of these in total quantities of 0 to 30 wt.%, calculated on the total weight of the mixture.

Resistance to thermo-oxidative degradation which is sufficiently good for the purposes of the present invention is expressed by an "OIT" (= oxidation induction time) value, which is determined at a temperature of 200°C and should be in the range from 10 to 20 min, preferably in the range from 12 to 17 min.

### Exemplary embodiments

A high molecular weight, medium density PE powder with a density of 0.946 g/cm³ and a melt flow index MI_{190/5} of 0.3 g/10 min, measured to ISO 1133, was combined with various additive formulations and pelletized on a ZSK 53 extruder from Coperion, Werner & Pfleiderer GmbH & Co KG at a melt temperature of 220°C. The pellets were then converted into sheets and subsequently cut into 2 cm wide strips. The strips were then aged over a period of 200 h in an aqueous solution containing 20 ppm of chlorine dioxide at a temperature of 60°C and a pH value of 6.5.

The intrinsic viscosity iV to DIN ISO 1628 in units of dl/g and the OIT value (= oxidation induction time) to DIN EN 728 at 200°C, corresponding to ASTM-D 3895, in units of min were then measured on the starting materials and on the aged samples. The results are listed in Table 1 below.

**Table 1**

| Example no. | Additive | Amount in % | State of matter at 25°C | iV in dl/g before/after | OIT (200°C) [min] |
|---|---|---|---|---|---|
| 1 | comparison, blank sample | ---- | ---- | 3.2/2.4 | < 1 |
| 2 | ETDC¹⁾ according to the invention | 0.2 | liquid | 3.2/3.2 | 15 |
| 3 | urea, comparison | 0.2 | solid | 3.2/3.0 | 5 |
| 4 | Chimasorb 944 comparison | 0.2 | solid | 3.2/2.6 | < 1 |
| 5 | Naugard XL-1 comparison | 0.2 | solid | 3.2/2.9 | 6 |
| 6 | MD 1024 comparison | 0.2 | solid | 3.2/2.9 | 5 |
| 7 | DMPD²⁾ according to the invention | 0.2 | liquid | 3.2/3.2 | 14 |
| 8 | Irganox 1010 plus ETDC according to the invention | 0.1 plus 0.1 | liquid | 3.2/3.2 | 15 |
| 9 | Irgaphos 168 plus DMPD according to the invention | 0.1 plus 0.1 | liquid | 3.2/3.2 | 14 |

| | | | | | |
|---|---|---|---|---|---|
| ¹⁾ ETDC = 6-ethoxy-2,2,4-trimethyl-1,2-dihydroquinoline ²⁾ DMPD = dimethylphenylenediamine | | | | | |

The above-described exemplary embodiments clearly reveal that the best results in stabilizing the polymer matrix against thermo-oxidative degradation are achieved when the liquid amines from Examples 2 and 7 are used.

The Comparative Examples clearly reveal that amino compounds which are in a solid state of matter under standard conditions are only capable of making a substantially lower contribution to stabilization and for this reason are less suitable for the purposes of the stabilization desired according to the invention.

## Claims

1. Process for improving the resistance to thermo-oxidative degradation of pipes made of thermoplastic polyolefins which are in extended contact with liquids containing disinfectants with an oxidative action, **characterized in that** the pipes are produced by extrusion of a polyolefinic moulding composition comprising at least one thermoplastic polyolefin and additionally an amount of 0.01 to 1.0 wt.%, calculated on the weight of the thermoplastic polyolefin, of an aromatic amine which is liquid under normal pressure and at temperatures in the range from 0 to 30°C.

2. Process according to claim 1, **characterized in that** the polyolefinic moulding composition comprises, as aromatic amine, 6-ethoxy-2,2,4-trimethyl-1,2- dihydroquinoline or dimethylphenylenediamine.

3. Process according to claim 1 or claim 2, **characterized in that** the polyolefinic moulding composition contains the aromatic amine in an amount in the range from 0.01 to 0.5 wt.%, preferably from 0.1 to 0.3 wt.%.

4. Process according to one of claims 1 to 3, **characterized in that** the polyolefinic moulding composition contains, as thermoplastic polyolefin, polyethylene or polypropylene or copolymers of ethylene and propylene or copolymers of ethylene or propylene with further olefinically unsaturated monomers having 4 to 10 C atoms.

5. Use of the pipe obtained from the process according to one or more of claims 1 to 4 for conveying drinking water.

## Patentansprüche

1. Verfahren zum Verbessern der Beständigkeit von aus thermoplastischen Polyolefinen hergestellten Rohren gegen thermooxidativen Abbau, die im Langzeitkontakt mit Flüssigkeiten stehen, die oxidativ wirkende Desinfektionsmittel enthalten, **dadurch gekennzeichnet, dass** die Rohre durch Extrusion einer polyolefinischen Formmasse, bestehend aus mindestens einem thermoplastischen Polyolefin und zusätzlich einer Menge von 0,01 bis 1,0 Gew.-%, berechnet auf das Gewicht des thermoplastischen Polyolefins, eines aromatischen Amins, das unter Normaldruck und im Temperaturbereich von 0 °C bis 30 °C flüssig ist.

2. Verfahren nach Anspruch 1, **dadurch gekennzeichnet, dass** die polyolefinische Formmasse, als aromatisches Amin, 6-Ethoxy-2,2,4-trimethyl-1,2-dihydrochinolin oder Dimethylphenylendiamin enthält.

3. Verfahren nach Anspruch 1 oder Anspruch 2, **dadurch gekennzeichnet, dass** die polyolefinische Formmasse das aromatische Amin in einer Menge im Bereich von 0,01 bis 0,5 Gew.-%, bevorzugt von 0,1 bis 0,3 Gew.-% enthält.

4. Verfahren nach einem der Ansprüche 1 bis 3, **dadurch gekennzeichnet, dass** die polyolefinische Formmasse, als thermoplastisches Polyolefin, Polyethylen oder Polypropylen oder Copolymere von Ethylen und Propylen oder Copolymere von Ethylen oder Propylen mit weiteren olefinisch ungesättigten Monomeren mit 4 bis 10 C-Atomen enthält.

5. Verwendung des mittels des Verfahrens nach einem oder mehr der Ansprüche 1 bis 4 erhaltenen Rohrs zum Transport von Trinkwasser.

## Revendications

1. Procédé pour améliorer la résistance à la dégradation thermo-oxydante de tuyaux en polyoléfines thermoplastiques qui sont en contact prolongé avec des liquides contenant des désinfectants dotés d'une action oxydante, **caractérisé en ce que** les tuyaux sont produits par extrusion d'une composition de moulage polyoléfinique comprenant au moins une polyoléfine thermoplastique et, en plus, une quantité de 0,01 à 1,0% en poids, calculée sur base du poids de la polyoléfine thermoplastique, d'une amine aromatique qui est liquide à pression normale et à des températures dans la plage de 0 à 30°C.

2. Procédé selon la revendication 1, **caractérisé en ce que** la composition de moulage polyoléfinique comprend, en tant qu'amine aromatique, de la 6-éthoxy-2,2,4-triméthyl- 1,2-dihydroquinoléine ou de la diméthylphénylènediamine.

3. Procédé selon la revendication 1 ou la revendication 2, **caractérisé en ce que** la composition de moulage polyoléfinique contient l'amine aromatique en une quantité située dans la plage de 0,01 à 0,5% en poids, de préférence de 0,1 à 0,3% en poids.

4. Procédé selon l'une quelconque des revendications 1 à 3, **caractérisé en ce que** la composition de moulage polyoléfinique contient, comme polyoléfine thermoplastique, du polyéthylène ou du polypropylène ou des copolymères d'éthylène et de propylène ou des copolymères d'éthylène ou de propylène avec d'autres monomères oléfiniquement insaturés, comprenant 4 à 10 atomes de carbone.

5. Utilisation du tuyau obtenu par le procédé selon l'une ou plusieurs des revendications 1 à 4 pour le transport d'eau potable.
